Europäisches Patentamt

European Patent Office

Office européen des brevets

(11) Numéro de publication: **0 054 500**
**B1**

(12) **FASCICULE DE BREVET EUROPEEN**

(45) Date de publication du fascicule du brevet: **01.06.88**

(21) Numéro de dépôt: **81402011.1**

(22) Date de dépôt: **16.12.81**

(51) Int. Cl.⁴: **B 62 D 59/02,** B 60 K 17/34

(54) **Dispositif hydraulique pour l'entraînement d'une semi-remorque attelée à un véhicule tracteur routier et de travaux de chantier.**

(30) Priorité: **16.12.80 FR 8026650**

(43) Date de publication de la demande:
**23.06.82 Bulletin 82/25**

(45) Mention de la délivrance du brevet:
**01.06.88 Bulletin 88/22**

(84) Etats contractants désignés:
**BE DE IT NL**

(56) Documents cités:
**BE-A- 691 743**
**DE-A-1 964 708**
**FR-A-2 142 300**
**FR-A-2 377 291**
**FR-A-2 427 520**
**GB-A-2 010 451**
**US-A-3 780 819**
**US-A-3 888 142**
**US-A-3 981 374**

(73) Titulaire: **Fouquet, Jean-Claude**
**4 Avenue des Alouettes**
**F-91540 Mennecy (FR)**

(72) Inventeur: **Fouquet, Jean-Claude**
**4 Avenue des Alouettes**
**F-91540 Mennecy (FR)**

(74) Mandataire: **Bressand, Georges et al**
**c/o CABINET LAVOIX 2 Place d'Estienne d'Orves**
**F-75441 Paris Cedex 09 (FR)**

Courier Press, Leamington Spa, England.

## Description

La présente invention a pour objet un dispositif hydraulique pour l'entraînement d'une semi-remorque attelée à un véhicule tracteur routier et de travaux de chantier.

Plus particulièrement, ce dispositif est adapté pour être commandé à partir de la boîte de vitesses et d'une prise de mouvement débrayable d'un moteur thermique du tracteur, afin de transmettre le couple mécanique du moteur thermique à au moins un essieu de la semi-remorque. Il comprend un système hydrostatique fermé assurant la transmission mécanique entre la prise de mouvement du tracteur et l'essieur correspondant de la semi-remorque, ce système hydrostatique étant capable de reproduire les mouvements commandés à partir de la boîte de vitesses du tracteur, et comportant une pompe hydraulique à débit variable reliée à la prise de mouvement, et un moteur hydraulique monté sur la semi-remorque, alimenté par la pompe hydraulique et relié à une boîte de transfert réductrice accouplée à au pont de la semi-remorque, la pompe hydraulique pouvant être bloquée dans l'une ou l'autre de deux cylindrées distinctes correspondant dans un sens à la marche avant du véhicule et dans l'autre à la marche arrière du véhicule.

Les ensembles articulés classiques véhicule tracteur/semi-remorque ne disposent pas de la motricité sous la charge, nécessaire pour résoudre les phénomènes d'adhérence au sol, indispensable en chantier. Ces ensembles classiques ne peuvent donc pas être utilisée pour les travaux publics, c'est-à-dire en utilisation mixte route-chantiers.

L'invention a ainsi pour but de transmettre une partie de la puissance motrice du moteur thermique du tracteur aux essieux de la semi-remorque, afin de permettre d'utiliser un ensemble articlé tracteur/semi-remorque pour des travaux de chantier.

Les tracteurs connus sont pourvus d'un moteur thermique qui transmet mécaniquement son couple et sa vitesse de rotation à un embrayage couplé à une boîte de vitesses, laquelle est reliée par une transmission à cardans à un ou deux essieux moteurs ou ponts du tracteur. Ces ponts, équipés d'un système de freinage et de roues avec pneumatiques, transmettent le couple moteur aux roues et sont généralement équipés d'un différentiel avec blocage télécommandé ou automatique.

D'autre part, les semi-remorques qui reçoivent la charge doivent être équipés d'un ou plusieurs essieux moteurs pour transmettre le couple mécanique du moteur thermique du tracteur. Or, il n'est pas possible, compte tenu de la conception actuelle des emsembles articulés considérés, de relier le ou les essieux moteurs de la semi-remorque par transmission à cardans à la boîte de vitesses du tracteur.

Le US—A—3 981 374 décrit un dispositif hydraulique montrant les caractéristiques du préambule de la revendication 1. Ce système connu comporte une pompe hydraulique pouvant être bloquée dans l'une ou l'autre de deux cylindrées distinctes correspondant à la marche avant et à la marche arrière. Mais ce dispositif est dépourvu de boîte de transfert réductrice entre le moteur hydraulique et le pont de la semi-remorque, ainsi que de tout moyen propre à assurer une synchronisation entre des vitesses du tracteur et de la semi-remorque.

Le FR—A—2 377 291 divulgue un pont automoteur pour essieu de remorque, comprenant un moteur hydraulique entraînant l'essieu par un système d'engrenages coopérant avec les extrémités de deux demi-essieux coaxiaux formant ledit essieu. Ce système ne comporte pas non plus de boîte de transfert réductrice entre le moteur hydraulique et le pont de la remorque.

Conformément à l'invention, le dispositif est caractérisé par les moyens énoncés à la partie caractérisante de la revendication 1 ainsi que par ceux visés aux revendications 2 à 5.

Le système hydraulique fait donc office de transmission mécanique entre la boîte de vitesses du tracteur et le système mécanique de la semi-remorque, et est agencé pour produire les mêmes effets au sol quelle que soit la vitesse du moteur du tracteur et les opérations effectuées par le chauffeur: freinage, accélération.

La transmission du couple mécanique à la semi-remorque est particulièrement nécessaire à basse vitesse, lors des déplacements du tracteur et de la semi-remorque en terrain difficile, donc pour les plus grandes démultiplications de la boîte de vitesses.

La motricité de la semi-remorque doit être parfaitement synchronisée en marche avant et en marche arrière avec le tracteur, pour qu'on obtienne une réelle efficacité dans l'adhérence au sol. De plus, les commandes doivent être automatiques et indéréglables, afin que le conducteur du tracteur puisse rester concentré sur la conduite du véhicule.

L'invention sera maintenant décrite en référence aux dessins annexés qui représentent un exemple de réalisation non limitatif du dispositif hydraulique d'entraînement de semi-remorque visé par l'invention:

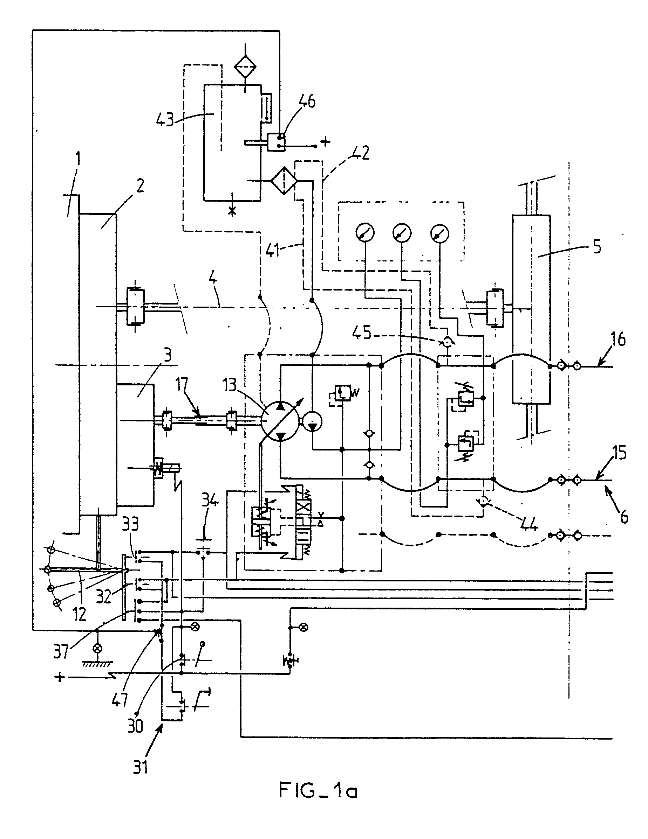

—La figure 1a est la partie montée sur le tracteur du schéma hydraulique et électrique d'une forme de réalisation selon l'invention du dispositif d'entraînement d'une semi-remorque attelée à un véhicule tracteur.

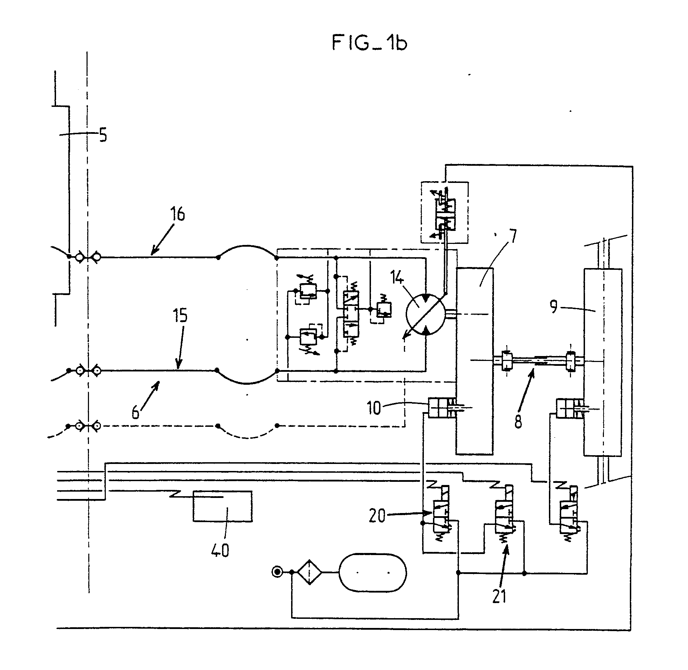

—La figure 1b est un schéma complémentaire de la figure 1, représentant la partie du dispositif montée sur la semi-remorque.

Le véhicule tracteur non représenté, est équipé d'un moteur thermique 1 transmettant mécaniquement son couple et sa vitesse de rotation à un embrayage couplé à une boîte de vitesses 2 reliée par une transmission à cardans 4 à au moins un essieu moteur ou pont 5 du tracteur. Ces ponts sont équipés de manière connue en soi, d'un système de freinage et de roues avec pneumatiques, transmettent le couple moteur aux roues et sont généralement pourvus d'un différentiel avec blocage télécommandé ou automatique, ces organes connus en soi n'étant pas représentés.

La semi-remorque, non représentée, est équipée d'au moins un pont 9 similaire au pont 5 du tracteur, et d'une boîte de transfert réductrice 7 débrayable. La démultiplication constante de celle-ci correspond approximativement à la plus grande démultiplication de la boîte de vitesses 2 du tracteur, La boîte de transfert réductrice 7 est reliée au pont 9 par une transmission à cardans 8, et est munie d'un embrayage par crabot, commandé par un vérin pneumatique 10.

Suivant l'invention, le dispositif comprend un système hydrostatique fermé désigné dans son ensemble par la référence 6, agencé pour assurer la transmission mécanique entre la prise de mouvement 3 du tracteur et l'essieu correspondant 9 de la semi-remorque. Ce système hydrostatique 6 est réalisé de façon à pouvoir reproduire les mouvements commandés à partir de la boîte de vitesses 2 par l'intermédiaire de son levier manuel 12, c'est-à-dire marche avant dans un sens de circulation du fluide, marche arrière par inversion du sens de circulation du fluide, et point mort par équilibre des circuits de fluide.

Le système hydrostatique fermé 6 comporte ainsi une pompe hydraulique 13 à débit variable, et un moteur hydraulique 14 monté sur la semi-remorque et relié à la pompe 13 par deux circuits de fluide 15, 16.

La pompe hydraulique 13 est reliée à la prise de mouvement 3 du tracteur par une transmission à cardans 17, tandis que le moteur hydraulique 14 est accouplé à la boîte de transfert réductrice 7.

La pompe hydraulique 13 peut être bloquée dans l'une ou l'autre des deux cylindrées distinctes, correspondant dans un sens à la marche avant du véhicule, et dans l'autre à la marche arrière de celui-ci.

La pompe hydraulique 13 est de préférence accouplée à la prise de mouvement débrayable 3 du tracteur pour des raisons de sécurité (lors du débrayage du tracteur), et pour la simplicité de l'utilisation. En outre, cette prise de movement 3 permet de prélever la puissance nécessaire et fournit un rapport constant de vitesses de rotation par rapport au moteur 1.

D'autre part, le moteur hydraulique 14 plaqué sur la boîte 7, transmet son couple et sa vitesse de rotation à la transmission 8 et au pont 9, lorsque le crabot est en position verrouillée. Dans la position déverrouillée du crabot, la transmission 8 et le pont 9 sont libérés, et peuvent être utilisés dans les conditions normales d'un essieu de semi-remorque et à la vitesse maximum du véhicule.

Le moteur hydraulique 14, à cylindrées fixes, a une vitesse de rotation proportionnelle à la cylindrée de la pompe 13, et ce rapport est constant dans la mesure où la cylindrée de la pompe à débit variable 13 reste fixe; cela est le cas pour les deux réglages mentionnés ci-dessus, effectués en marche arrière et en marche avant du véhicule.

L'invention prévoit des moyens pour synchroniser les vitesses du tracteur et de la semi-remorque sur au moines une vitesse en marche avant et sur une vitesse en marche arrière. Cette synchronisation des vitesses est réalisée en déterminant la cylindrée X de la pompe hydraulique 13 et la cylindrée Y du moteur hydraulique 14 après les formules suivantes:

$$Y = \frac{Y \cdot DP \cdot R1}{Z \cdot BTC \cdot V \cdot R2}$$

$$Y = \frac{X \cdot Z \cdot BTC \cdot V \cdot R2}{DP \cdot R1}$$

dans lesquelles:

D = Démultiplication constante de la boîte de transfert réductrice (7) débrayable montée sur la semi-remorque,

P = Démultiplication constante du pont (9) monté sur la semi-remorque,

R1 = Circonférence de roulement des pneumatiques équipant le pont (5) du tracteur,

R2 = Circonférence de roulement des pneumatiques équipant le pont (9) de la semi-remorque,

V = Rendement volumétrique de la pompe (13) et du moteur hydraulique (14),

Z = Rapport constant de la démultiplication de la prise de mouvement (3) par rapport au moteur (1) du tracteur,

B = Rapport constant de la boîte de vitesses (2) du tracteur, sur lequel est effectuée la synchronisation,

T = Rapport constant de la boîte de transfert susceptible d'être montée entre la boîte de vitesses (2) et le pont (5),

C = Réduction totale et constante du pont (5) monté sur le tracteur.

La cylindrée X de la pompe hydraulique 13 est obtenue par l'application de la formule ci-dessus, en fonction des paramètres Y, D, P, R1, R2, Z, V, T, C ainsi que du paramètre B qui correspond au rapport choisi pour la synchronisation sur la boîte de vitesses 2 du tracteur.

La pompe hydraulique à débit variable 13 réglée par une butée mécanique non représentée à une cylindrée fixe X, fonctionne comme une pompe à cylindrée fixe, et permet au pont 9 de la semi-remorque, lorsque la boîte réductrice 7 est crabotée, d'engendrer une vitesse de déplacement de la semi-remorque identique à celle du tracteur.

Dans ces conditions, les vitesses du tracteur et de la semi-remorque étant identiques et synchronisées, le circuit hydraulique est à une pression nulle si l'adhérence au sol est normale.

Pour la valeur B correspondant à la démultiplication de la première vitesse marche avant de la boîte de vitesses 2 du tracteur, on obtient. une valeur X appelée ci-après X (AV1).

Pour la valeur B correspondant à la démultiplication de la première vitesse march arrière de la boîte de vitesses 2 du tracteur, on obtient une valeur X appelée ci-après X (AR1). On a donc:

X(AV1) = cylindrée constante de la pompe 13 pour synchronisation en marche avant de la vitesse du tracteur et de la semi-remorque.

X(AR1)=cylindrée constante de la pompe 13 pour synchronisation en marche arrière de la vitesse du tracteur et de la semi-remorque.

Ces deux réglages de cylindrée de la pompe 13 se font par l'adjonction de butées mécaniques, limitant la course de chacun des deux servo-pistons qui commandent l'inclinaison du plateau-came mobile de la pompe, dans un sens différent, ces organes connus en soi n'ayant pas été représentés dans un but de simplification du dessin.

—Le servo-piston commandant l'inclinaison du plateau-came mobile pour le sens du fluide correspondant à la marche avant, est calé afin d'obtenir la valeur de cylindrée X(AV1).

—Le servo-piston commandant l'inclinaison du plateau-came mobile pour le sens du fluide correspondant à la marche arrière, est calé afin d'obtenir la valeur de cylindrée X(AR1).

Dans l'exemple d'exécution décrit, le mode de réalisation de la semi-remorque est également prévu pour le rapport de la deuxième vitesse en marche avant, en plus des deux vitesses déjà retenues (première marche avant et première marche arrière). Le moteur hydraulique 14 monté sur la boîte 7 de la semi-remorque permet de disposer de deux cylindrées distinctes, proportionnelles aux deux rapports de vitesse correspondants utilisés sur la boîte de vitesses 2 en marche avant.

Ces deux réglages de cylindrée fixe sont calculés d'après la formule précédente:

—Y(AV1) pour la valeur B correspondant à la démultiplication de la première vitesse marche avant de la boîte de vitesses 2 du tracteur;

—Y(AV2) pour la valeur B correspondant à la démultiplication de la deuxième vitesse marche avant de la boîte de vitesses 2 du tracteur.

Ces deux réglages de la cylindrée du moteur 14 s'effectuent de la même manière que le réglage de la cylindrée de la pompe 13. En pratique, on utilise la cylindrée maximum du moteur hydraulique 14 pour la valeur Y(AV1), de sorte qe Y(AV2) se trouve défini par la relation suivante:

$$Y(AV2)=Y(AV1)\times\frac{B_2}{B_1}$$

$B_1$=étant le rapport de démultiplication de la première vitesse en marche avant de la boîte de vitesses 2 du tracteur, et $B_2$ étant le rapport de démultiplication de la deuxième vitesse en marche avant de la boîte de vitesses 2.

La variation Y(AV1) à Y(AV2) de la cylindrée du moteur 14 est automatique, et intervient au moment où le conducteur du tracteur enclenche la deuxième vitesse en marche avant sur la boîte de vitesses 2.

Le dispositif visé par l'invention est ainsi pourvu de moyens pour asservir automatiquement le système hydrostatique 6 à la boîte de vitesses 2, en particulier au débrayage, à l'embrayage, à la première vitesse en marche avant, à la première vitesse en marche arrière et à la seconde vitesse en marche avant.

Ces moyens d'asservissement automatique comprennent, dans l'exemple représenté, un circuit électrique, commandé par un premier contacteur 30 associé à la prise de mouvement 3, pourvu d'un second contacteur 31 placé sur la pédale de commande de la boîte de vitesses 2 et qui commande lui-même:

a) d'une part le décrabotage de la boîte réductrice 7 accouplée au moteur 14, par l'intermédiaire de distributeurs 20 et 21;

b) d'autre par la mise en position "neutre" de la pompe hydraulique 13.

Par ailleurs, un contacteur électrique 37 monté sur la tringlerie de la deuxième vitesse marche avant de la boîte 2, envoie l'information à la servocommnade du moteur hydraulique 14; cet agencement permet de faire passer automatiquement la cylindrée Y du moteur 14 de Y(AV1) à Y(AV2) au moment où le chauffeur enclenche la deuxième vitesse en marche avant sur la boîte de vitesses 2.

La commande des différentes fonction de motorisation de la semi-remorque est assurée de la manière suivante:

Toutes les commandes sont automatiques et asservies en premier lieu sur la commande électropneumatique de la prise de mouvement 3 de la boîe 2. L'enclenchement de la prise de mouvement 3 provoque, par le contacteur 30, la mise sous tension du circuit générale de commande et en particulier la liaison, par un commutateur relais 34, avec le circuit électrique 40 des feux de recul, témoins de l'enclenchement de la marche arrière sur la boîte 2.

Sur ce circuit électrique de commande des différentes fonctions asservies par l'enclenchement de la prise de mouvement 3, on trouve en série le contacteur 31 sur la pédale du tracteur commandant l'embrayage et le débrayage de la boîte de vitesses 2. Le contacteur 31 coupe le circuit électrique en position débrayée de la pédale et a pour effet d'exécuter les deux commandes mentionnées précédemment.

Le contacteur 31 monté en série ferme le circuit électrique dans la position "embrayée" de la pédale, et met en circuit les trois contacteurs 32, 33, 37 montés en série sur le circuit électrique de commande des différentes fonctions de motorisation de la semi-remorque.

a) Le contacteur 32 est monté sur la première vitesse en marche avant; l'enclenchement de cette première vitesse permet au contacteur 32 d'envoyer l'information correspondante à la servocommande de la pompe 13, qui passe de la position neutre à la position de cylindrée X(AV1) et au distributeur 21 qui commande le crabotage de la boîte réductrice 7.

b) Le contacteur 33 est monté sur la première vitesse en marche arrière: l'enclenchement de cette première vitesse en marche arrière permet au contacteur 33 d'envoyer l'information correspondante à la servocommmande de la pompe 13, qui passe de la position neutre à la position de cylindrée X(AR1) et au distributeur 20, qui commande le crabotage de la boîte 7.

c) Le contacteur 37 est monté sur la deuxième vitesse en marche avant: l'enclenchement de celle-ci permet au contacteur 37 d'envoyer l'information correspondante à la servo-commande de la pompe 13, qui passe de la position neutre à la position de cylindrée X(AV1), à la servo-commande du moteur hydraulique 14 qui passe de la position Y(AV1) à la position Y(AV2), et au distributeur 21 qui commande le crabotage de la boîte 7.

Suivant une autre particularité de l'invention, le dispositif est équipé d'une alimentation de secours du moteur hydraulique 14, lorsque la pompe 13 n'est pas entraînée. Le dispositif comporte aini des liaisons directes 41, 42 entre un réservoir hydraulique 43 placé sur le tracteur, et les circuits hydrauliques respectifs 15 et 16 reliant la pompe 13 au moteur 14. Le réservoir 43 d'huile hydraulique étant normalement destiné à l'alimentation de la pompe 13, est ainsi relié à chacun des deux circuits hydrauliques 15 et 16 par les canalisations 41, 42 respectivement pourvues d'un clapet anti-retour 44, 45. Ces derniers permettent le passage de l'huile uniquement dans le sens réservoir 43-moteur 14, lorsque le circuit hydraulique est à une pression nulle.

Par ailleurs, le réservoir 43 est équipé d'un thermostat 46 commandant la coupure du circuit électrique par un commutateur 47 positionné sur l'alimentation générale, avant le contacteur 30 de la prise de mouvement 3.

Ces circuits ont les fonctions suivantes:

—On a indiqué précédemment que chaque phase de la motorisation de la seim-remorque est asservie au débrayage de la boîte de vitesse 2 par le contacteur 31 monté sur la pédale de commande. Au cas où la fonction de décrabotage de la boîte réductrice 7 commandée par le contacteur 31 et les distributeurs 20, 21 ne s'effectue pas pour différentes raisons (mauvais fonctionnement du circuit électrique et pneumatique, ou contrainte mécanique sur la boîte 7 par une charge entraînante), l'alimentation de ce courant d'huile du moteur 14 décrite ci-dessus est déclenchée, et ce dans les deux sens de rotation.

Cette alimentation complémentaire d'huile lorsque la pompe 13 n'est pas entraînée, s'effectue grâce au phénomène d'aspiration et de gravité et par les branchements directs 41, 42 au réservoir 43, pour les deux sens possibles de circulation du fluide.

D'autre part, l'installation du thermostat 46 et du commutateur 47 a pour but de pallier à toutes utilisations intensives nécessitant le montage d'un circuit de refroidissement du fluide hydraulique. En effet, la motorisation de la semi-remorque étant généralement mise en oeuvre dans les chantiers pendant de courtes périodes entrecoupées de poses relativement longues correspondant à sa mise hors service par l'utilisation normale sur route de l'ensemble tracteur/semi-remorque, il en résulte qu'un circuit de refroidissement n'est pas indispensable. Le montage du thermostat 46 et du commutateur 47 évite l'installation d'un tel circuit de refroidissement.

Pour accroître la motricité de la semi-remorque sur un sol dont l'adhérence est faible, l'invention prévoit d'augmenter les valeurs des cylindrées de la pompe hydraulique 13, correspondant respectivement à la marche avant et à la marche arrière, par un réglage approprié de la course du servo-piston de la pompe 13.

Ce réglage est exécuté de façon à maintenir dans le système hydraulique fermé 6, une pression permanente égale à environ 10 à 40% de sa pression maximum d'utilisation, par exemple 25%.

En effet, compte tenu des temps de réponse différents entre la transmission mécanique et hydraulique et de l'inertie de la charge sur la semi-remorque, un réglage de prédominance de la motricité de la semi-remorque par rapport au tracteur est souhaitable. Ce réglage est obtenu par l'augmentation des cylindrées X(AV1) et X(AR1) de la pompe 13.

Le réglage s'effectue manuellement lors d'un essai en charge sur sol d'adhérence normale, par modification de la position de la butée mécanique (non représentée), limitant la course du servo-piston de la pompe 13 dans les deux positions de cylindrées X(AV1) et X(AR1), correspondant chacune à un sens du fluide différent pour la marche avant et la marche arrière. La légère augmentation des valeurs des cylindrées a pour conséquence de faire monter la pression dans le circuit hydraulique en fonctionement d'une valeur nulle à une valeur comprise entre 10 et 40% de la pression maximum d'utilisation, selon le degré du réglage effectué.

Lorsque la prise de force 3 est embrayée, le dispositif visé par l'invention assure la mise en service automatique sur l'extralente ou la première vitesse de la boîte de vitesse 2, et sur la marche arrière correspondante. Dans l'exemple décrit, le même résultat est obtenu également sur la deuxième vitesse en marche avant. Lorsque la prise de mouvement 3 est débrayée, le dispositif est mis hors service automatiquememt sur les autres vitesses.

L'invention n'est pas limités à la forme de réalisation décrite et peut comporter de nombreuses variantes d'exécution.

**Revendications**

1. Dispositif hydraulique pour l'entraînement d'une semi-remorque attelée à un véhicule tracteur routier, et de travaux de chantiers, adapté pour être commandé à partir de la boîte de vitesses (2) et d'une prise de mouvement débrayable (3) d'un moteur thermique (1) du tracteur afin de transmettre le couple mécanique du moteur (1) à au moins un essieu de la semi-remorque, comprentant un système hydrostatique fermé (13, 14, 15) assurant la transmission mécanique entre la prise de mouvement (3) du tracteur et l'essieu correspondant (9) de la semi-remorque, ce système hydrostatique étant capable de reproduire les mouvements commandés à partir de la boite de vitesse (2) du tracteur, et comportant une pompe hydraulique (13) à débit variable reliée à la prise de mouvement (3), et un moteur hydraulique (14) monté sur la semi-remorque, alimenté par la pompe hydraulique (13) et relié à une boite de transfert réductrice (7) accouplée à un pont (9) de la semi-remorque, la pomp hydraulique (13) pouvant être bloquée dans l'une ou l'autre de deux cylindrées distinctes correspondant dans un sens à la marche avant du véhicule et dans l'autre à la marche arrière du véhicule, caractérisé en ce que des moeyns sont prévus pour synchroniser les vitesses du tracteur et de la semi-remorque sur au moins une vitesse en marche avant et sur au moins une vitesse en marche arrière, et cette synchronisation est réalisée en déterminant la cylindrée X de la pompe hydraulique à débit variable et la cylindrée Y du moteur hydraulique d'après les formules suivantes:

$$X = \frac{Y \cdot DP \cdot R1}{Z \cdot BTC \cdot V \cdot R2}$$

$$Y = \frac{X \cdot Z \cdot BTC \cdot V \cdot R2}{DP \cdot R1}$$

dans lesquelles:

D=Démultiplication constante de la boite de transfert réductrice (7) débrayable montée sur la semi-remorque,

P=Démultiplication constante du pont (9) monté sur la semi-remorque,

R1=Circonférence de roulement des pneumatiques équipant le pont (5) du tracteur,

R2=Circonférence de roulement des pneumatiques équipant le pont (9) de la semi-remorque,

V=Rendement volumétrique de la pompe (13) et du moteur hydraulique (14),

Z=Rapport constant de la démultiplication de la prise de mouvement (3) par rapport au moteur (1) du tracteur,

E=Rapport constant de la boîte de vitesses (2) du tracteur sur lequel est effectuée la synchronisation.

T=Rapport constant de la boîte de transfert susceptible d'étre montée entre la boîte de vitesses et le pont,

C=Réduction totale et constante du pont (5) monté sur le tracteur, et

le moteur hydraulique (14) présente deux cylindrées distinctes, proportionnelles aux deux rapports de vitesses correspondants utilisées sur la boîte de vitesses (2) en marche ayant, à savoir:

—Y(AV1) pour la valeur B correspondant à la démultiplication de la première vitesse marche avant de la boîte de vitesses (2) du tracteur,

—Y(AV2) pour la valeur B correspondant à la démultiplication de la deuxième vitesse marche avant de la boîte de vitesses (2) du tracteur, le dispositif étant de plus pourvu de moyens pour asservir automatiquement le système hydrostatique (13, 14, 15, 16) à la boîte de vitesses (2) du tracteur, en particulier au débrayage, à l'embrayage, à la première vitesse en marche avant, à la première vitesse en marche arrière, et à la seconde vitesse en marche avant.

2. Dispositif selon la revendication 1, caractérisé en ce que les moyens d'asservissement automatique comprennent un circuit électrique commandé par un premier contacteur (30) associé à la prise de mouvement (3), pourvu d'un second contacteur (31) placé sur la pédale de commande (12) de la boîte de vitesses (3), et qui commande:

—d'une part de décrabotage de la boîte réductrice (7) accouplée au moteur hydraulique (14) par l'intermédiaire de distributeurs (20, 21),

—d'autre part la mise en position "neutre" de la pompe hydraulique (13), et ce circuit électrique comporte trois autres contacteurs (32, 33, 37) respectivement montés sur la première vitesse en marche avant, la première vitesse en march arrière et la seconde vitesse en marche avant, dont les enclenchements successifs permettent au contacteur correspondant (32, 33, 37) de transmettre une information à la servo-commande de la pompe hydraulique (13) qui passe de la position neutre à la position de cylindrée voulue, ainsi qu'à un distributeur (20, 21) qui commande le crabotage de la boîte réductrice (7).

3. Dispositif selon l'une des revendications 1 et 2 caractérisé en ce que, pour accroître la motricité de la semi-remorque sur un sol dont l'adhérence est faible, on augmente les valeurs des cylindrées de la pompe hydraulique (13) correspondant respectivement à la marche avant et à la marche arrière, par un réglage approprié de la course de servopiston de la pompe (13), de façon à maintenir dans le système hydraulique une pression permanente égale à environ 10 à 40% de sa pression maximum d'utilisation.

4. Dispositif selon l'une des revendications 2 et 3, caractérisé en ce qu'il est équipé d'une alimentation de secours du moteur hydraulique (14) lorsque la pompe (13) n'est pas entraînée, comportant des liaisons directes (41, 42) entre un réservoir hydraulique (43) placé sur le tracteur et les circuits hydrauliques (15, 16) entre la pompe (13) et le moteur (14).

**Patentansprüche**

1. Hydraulische Vorrichtung zum Antrieb eines an einer Zugmaschine für den Straßen- und Baustellenverkehr gekoppelten Sattelaufliegers, die zur Steuerung durch das Getriebe (2) ausgelegt ist und einen auskuppelbaren Abtrieb (3) eines Verbrennungsmotors (1) der Zugmaschine aufweist, um das mechanische Drehmoment des Motors (1) auf mindestens eine Achse des Sattelaufliegers zu übertragen, mit einem geschlossenen hydrostatischen System (13, 14, 15), das die mechanische Übertragung zwischen dem Bewegungsabtrieb (3) der Zugmaschine und der entsprechenden Achse (9) des Sattelaufliegers gewährleistet, wobei das hydrostatische System in der Lage ist von dem Getriebe (2) der Zugmaschine gesteuerte Bewegungen zu erzeugen und eine hydraulische Pumpe (13) mit variablem Durchsatz aufweist, die an den Bewegungsabtrieb (3) angeschlossen ist und einen hydraulischen Motor (14) der auf dem Sattelauflieger angeordnet ist, durch eine hydraulische Pumpe (13) gespeist wird und an ein Reduziergetriebe (17) angeschlossen ist, das an einer Brücke (9) des Sattelaufliegers angeschlossen ist, wobei die hydraulische Pumpe (13) sei dem einen oder dem anderen von zwei unterschiedlichen entsprechenden Hubräumen blockiert werden kann, was in einer Richtung dem Vorwärtsfahren des Fahrzeugs und in der anderen Richtung dem Rückwärtsfahren des Fahrzeugs entspricht, dadurch gekennzeichnet, daß Organe vorgesehen sind zur Synchronisation der Gänge der Zugmaschine und des Sattelaufliegers bezüglich mindestens eines Vorwärtsganges und eines Rückwärtsganges, wobei diese Synchronisation erfolgt indem der Hubraum X der hydraulischen Pumpe mit variablem Durchsatz und der Hubraum Y des hydraulischen Motors nach folgenden Formeln bestimmt wird

$$X = \frac{Y \cdot DP \cdot R1}{Z \cdot BTC \cdot V \cdot R2}$$

$$Y = \frac{X \cdot Z \cdot BTC \cdot V \cdot R2}{DP \cdot R1}$$

wobei:

D = ein konstanter Demultiplikationsfaktor des auf dem Sattelauflieger montierten auskuppelbaren Reduziergetriebes (7),

P = konstanter Demultiplikationsfaktor der auf dem Sattelauflieger montierten Brücke (9),

R1 = der Umfang der Lauffläche der Reifen mit denen die Brücke (5) der Zugmaschine ausgerüstet ist,

R2 = der Umfang der Laufflächen der Reifen mit denen die Brücke (9) des Sattelaufliegers ausgerüstet ist,

V = die Volumenförderleistung der Pumpe (13) und des hydraulischen Motors (14),

Z = das konstante Untersetzungsverhältnis des Bewegungsabtriebs (3) bezüglich des Motors (1) der Zugmaschine,

B = die konstante Übersetzung des Getriebes (2) der Zugmaschine, bei dem die Synchronisierung stattfindet,

T = die konstante Übersetzung des Verteilergetriebes, das zwischen dem Getriebe und der Brücke anordbar ist, und

C = der gesamte konstante Reduzierfaktor der Brücke (5), die an der Zugmaschine angeordnet ist, ist

und wobei der Hydraulikmotor (14) zwei unterschiedliche Hubräume aufweist, die proportional zu den beiden entsprechenden Vorwärtsgängen des Getriebes (2) verwendet werden, nämlich

—Y (AV1) für den Wert B, der einer Reduzierung des ersten Vorwärtsgangs des Getriebes (2) der Zugmaschine entspricht und

—Y (AV2) für den Wert B, der der Reduzierung des zweiten Vorwärtsgangs des Getriebes (2) der Zugmaschine entspricht und dadurch, daß die Vorrichtung mit Mitteln zu automatischen Steuerung des hydrostatischen Systems (13, 14, 15, 16) des Getriebes (2) der Zugmaschine, insbesondere beim Entkuppeln, beim Einkuppeln und im ersten Vorwärtsgang, im ersten Rückwärtsgang sowie im zweiten Vorwärtsgang, vorgesehen ist.

2. Vorrichtung nach Anspruch 1, dadurch gekennzeichnet, daß die automatischen Steuermittel eine elektrische Schaltung aufweisen, die durch einen ersten Schalter (30) gesteuert wird, der mit dem Bewegungsabtieb (3) verbunden ist, und die mit einem zweiten Schalter (31) versehen ist, der auf dem Kupplungspedal (12) des Getriebes (3) angeordnet ist und

—einerseits das Abkoppeln des Reduktionsgetriebes (17), der über Verteiler (20, 21) an den Hydraulikmotor (14) angeschlossen ist und andererseits das Schalten der Hydraulikpumpe (13) in eine "neutrale" Stellung steuert, wobei diese elektrische Schaltung drei weitere Schalter (32, 33, 37) aufweist, die jeweils auf dem ersten Vorwärtsgang, dem ersten Rückwärtsgang und dem zweiten Vorwärtsgang angeordnet sind und deren aufeinanderfolgendes Schließen es ermöglicht den entsprechenden Kontakt (32, 33, 37) eine Information an die Servosteuerung der hydraulischen Pumpen (13) weiterzugeben, die aus der neutralen Stellung in die Stellung, die dem gewünschten Hubraum entspricht, übergeht, sowie an einen Verteiler (21) der das Eingreifen des Reduziergetriebes (7) steuert.

3. Vorrichtung nach einem der Ansprüche 1 und 2, dadurch gekennzeichnet, daß zur Steigerung der Antriebskraft des Sattelaufliegers auf einem nur wenig haftenden Untergrund die Werte der Hubräume der entsprechenden Hydraulikpumpe (13) jeweils im Vorwärts bzw. Rückwärtsgang erhöht wird durch eine entsprechende Einstellung des Hubes des Servokolbens der Pumpe (13) derart, daß in dem Hydrauliksystem ein ständiger Druck aufrechterhalten wird, der ungefähr 10 bis 40% des maximalen Betriebsdrucks entspricht.

4. Vorrichtung nach einem der Ansprüche 2 und 3, gekennzeichnet durch eine Notspeisung des Hydraulikmotors (14) während die Pumpe (13) nicht angetrieben ist, die direkte Verbindung (41, 42) zwischen einem Hydraulikreservoir (43), das auf der Zugmaschine angeordnet ist und den hydraulischen Schaltungen (15, 16) zwischen der Pumpe (13) und dem Motor (14), aufweist.

## Claims

1. Hydraulic device for driving a semi-trailer coupled to a road tractor vehicle or vehicle for site work, which device is adapted to be controlled from the gear box (2) and a declutchable power take off (3) of a combustion engine (1) of the tractor in order to transmit the mechanical torque of the engine (1) to at least one axle of the semi-trailer, comprising a closed hydrostatic system (13, 14, 15) which ensures the mechanical transmission between the power take off (3) of the tractor and the corresponding axle (9) of the semi-trailer, this hydrostatic system being capable of reproducing the movements controlled from the gear box (2) of the tractor, and comprising a hydraulic pump (13) of variable flowrate, connected to the power take off (3), and a hydraulic motor (14) mounted on the semi-trailer, supplied by the hydraulic pump (13) and connected to a transfer box (7) coupled to an axle assembly (9) of the semi-trailer, it being possible for the hydraulic pump (13) to be locked to one or the other of two separate displacements corresponding in one direction to the forward movement of the vehicle and in the other to the reverse movement of the vehicle, characterized in that there are provided means to synchronize the gears of the tractor and of the semi-trailer over at least one gear of forward movement and at least one gear of reverse movement, and this synchronization is effected by determining the displacement X of the hydraulic pump of variable flowrate and the displacement Y of the hydraulic motor, according to the following formulae:

$$X = \frac{Y \cdot DP \cdot R1}{Z \cdot BTC \cdot V \cdot R2}$$

$$Y = \frac{X \cdot Z \cdot BTC \cdot V \cdot R2}{DP \cdot R1}$$

in which:

D=constant demultiplication of the declutchable reducing transfer box (7) mounted on the semi-trailer,

P=constant demultiplication of the axle assembly (9) mounted on the semi-trailer,

R1=rolling circumference of the tyres provided on the axle assembly (5) of the tractor,

R2=rolling circumference of the tyres provided on the axle assembly (9) of the semi-trailer,

V=volumetric efficiency of the pump (13) and of the hydraulic motor (14),

Z=constant ratio of demultiplication of the power take off (3) with respect to the engine (1) of the tractor,

B=constant ratio of the gear box (2) of the tractor in which synchronization is effected,

T=constant ratio of the transfer box which is capable of being mounted between the gear box and the axle assembly,

C=constant, total reduction of the axle assembly (5) mounted on the tractor, and

the hydraulic motor (14) has two separate displacements, proportional to the two corresponding gearing ratios used in the gear box (2) in forward movement, namely:

—Y (AV1) for the value B corresponding to the demultiplication of the first gear of forward movement of the gear box (2) of the tractor,

—Y (AV2) for the value B corresponding to the demultiplication of the second gear of forward movement of the gear box (2) of the tractor, the device being provided, moreover, with means for automatically controlling the hydrostatic system (13, 14, 15, 16) from the gear box (2) of the tractor, in particular for declutching, clutching, for the first forward movement gear, for the first reverse movement gear and for the second forward movement gear.

2. Device according to Claim 1, characterized in that the automatic control means comprise an electrical circuit controlled by a first switch (30) connected to the power take off (3), and provided with a second switch (31) placed on the control pedal (12) of the gear box (3), and which controls:

—on the one hand, the disengagement of the reducing box (7) coupled to the hydraulic motor (14) by means of distributors (20, 21),

—on the other hand, putting the hydraulic pump (13) into the "neutral" position, and this electrical circuit comprises three other switches (32, 33, 37) which are mounted on the first forward movement gear, the first reverse movement gear and the second forward movement gear respectively, of which the successive engagements enable the corresponding switch (32, 33, 37) to transmit information to the servo-control of the hydraulic pump (13) which moves from the neutral position to the position of desired displacement, and to a distributor (20, 21) which controls the engagement of the reducing box (7).

3. Device according to one of Claims 1 and 2 characterized in that, to increase road handling of the semi-trailer on a surface with poor grip, the values of the displacements of the hydraulic pump (13) corresponding respectively to forward movement and reverse movement are increased by an appropriate adjustment of the servo-piston travel of the pump (13), such that there is maintained in the hydraulic system a permanent pressure equal to approximately 10 to 40% of its maximum operating pressure.

4. Device according to one of Claims 2 and 3, characterized in that it is equipped with an auxiliary supply of the hydraulic motor (14) when the pump (13) is not driven, comprising direct connections (41, 42) between a hydraulic reservoir (43) placed on the tractor and hydraulic circuits (15, 16) between the pump (13) and the motor (14).

FIG_1a

FIG_1b